# EUROPÄISCHE PATENTSCHRIFT

(11) **EP 2 739 452 B1**
(45) Veröffentlichungstag und Bekanntmachung des Hinweises auf die Patenterteilung: **16.10.2019**
(21) Anmeldenummer: 12743457.9
(22) Anmeldetag: 03.08.2012
(51) Int. Cl.: B29C 53/60, F27B 14/10

(54) **VERFAHREN ZUM HERSTELLEN EINES BAUTEILS AUS EINEM FASERVERBUNDWERKSTOFF UMFASSEND WICKELLAGEN**
Method for producing A COMPONENT MADE OF A FIBER COMPOSITE MATERIAL COMPRISING WOUND LAYERS
Procédé de fabrication d'un ÉLÉMENT COMPOSÉ D'UN MATÉRIAU RENFORCÉ PAR DES FIBRES COMPRENANT DES COUCHES D'ENROULEMENT

(30) Priorität: 05.08.2011 DE 102011080507
(43) Veröffentlichungstag der Anmeldung: 11.06.2014
(73) Patentinhaber: SGL Carbon SE, 65201 Wiesbaden (DE)
(72) Erfinder: SCHRÖDER, Markus, 86405 Meitingen (DE); FROMMELT, Sebastian, 86405 Meitingen (DE); HINGST, Karl, 86405 Meitingen (DE)
(86) Internationale Anmeldenummer: PCT/EP2012/065272
(87) Internationale Veröffentlichungsnummer: WO 2013/020923

(56) Entgegenhaltungen:
- EP-A1- 2 361 752
- WO-A1-2010/125651
- DE-A1- 10 219 387
- JP-A- 11 255 586
- JP-U- 63 007 174
- US-A- 5 385 262
- WEAVER A: "Designing for winding", REINFORCED PLASTICS, ELSEVIER ADVANCED TECHNOLOGY, NEW YORK, NY, US, Bd. 40, Nr. 10, 1. Oktober 1996 (1996-10-01), Seiten 28-30,33, XP004141311, ISSN: 0034-3617

## Beschreibung

Die vorliegende Erfindung betrifft ein Verfahren zum Herstellen eines Bauteils, wie beispielsweise einen Tiegel zum Schmelzen eines Metalls, aus einem Faserverbundwerkstoff, das wenigstens drei übereinander angeordnete Wickellagen aus einem Fasermaterial umfasst.

Gewickelte Bauteile aus Faserverbundwerkstoffen werden auf verschiedenen Gebieten der Technik eingesetzt, beispielsweise bei der Fertigung von Schmelztiegeln oder Druckbehältern. Zur Herstellung derartiger Bauteile werden herkömmlicherweise gegebenenfalls mit Bindemittel imprägnierte Faserstränge um einen Wickelkern herumgewickelt und auf diesem abgelegt. Dabei können die Faserstränge, welche auch als Rovings bezeichnet werden, verschiedene Einzelfasern aus Kohlenstoff, Glas, Keramik oder Aramid umfassen, welche in eine aus Bindemittel ausgebildete Matrix aus Polymer oder aus Keramik eingebettet sein können, wobei die Polymermatrix später durch Carbonisieren in eine Kohlenstoffmatrix umgewandelt werden kann. Mithin kann das aus den Wickellagen gebildete Bauteil, gegebenenfalls nach Entfernung des Wickelkerns und nach entsprechender Aushärtung und gegebenenfalls Carbonisierung des Bindemittels, aus carbonfaserverstärktem Kunststoff (CFK), carbonfaserverstärktem Kohlenstoff (CFC), carbonfaserverstärkter Keramik oder keramikfaserverstärkter Keramik (CMC) aufgebaut sein.

Üblicherweise umfasst jede Wickellage eines solchen Bauteils mehrere Wickelwindungen, welche in gleicher Ausrichtung, d.h. zumindest im Wesentlichen parallel verlaufend, aneinander angrenzend oder einander überlappend angeordnet sind, so dass durch jede Wickellage zumindest ein Abschnitt des Wickelkerns von dem Fasermaterial vollständig - d.h. ohne Ausbildung von Aussparungen bzw. Zwischenräumen zwischen den Wickelwindungen - bedeckt ist. Dabei werden die einzelnen Wickellagen nacheinander über den Wickelkern gewickelt, wobei die einzelnen Wickelwindungen innerhalb jeder Lage, wie dargelegt, zumindest im Wesentlichen parallel zueinander verlaufen. Hierbei können die Wickelwinkel der Wickelwindungen verschiedener Wickellagen gleich oder verschieden sein. Bei der sogenannten Kreuzwicklung sind die Wickelwindungen benachbarter Wickellagen betragsmäßig gleich, unterscheiden sich aber in ihrem Vorzeichen gegenüber einer gleichen Referenzachse.
Ein Bauteil dieser Art bzw. eine Gesamtwicklung aus mehreren stapelartig übereinander angeordneten und jeweils für sich vollbedeckend ausgebildeten Wickellagen ist beispielsweise aus der EP 0 333 013 B1, WO2010/126551 A1, JP 63007174 U, DE 10219387 A1 oder JP11255586 A bekannt.

Ein Nachteil dieser bekannten Bauteile ist es, dass zwischen den einzelnen Wickellagen keine mechanische Verbindung besteht, sondern zwischen den einzelnen Wickellagen allenfalls eine relativ schwache Wechselwirkung aus chemischen und/oder physikalischen Bindungskräften vorliegt, beispielsweise in der Form eines die verschiedenen Wickellagen verklebenden Bindemittels. Aus diesem Grund ist die Stabilität, insbesondere mechanische Festigkeit, wie beispielsweise die Schlagzähigkeit oder die interlaminare Scherfestigkeit, der bekannten Bauteile der eingangs genannten Art verbesserungsbedürftig.

Es ist daher eine Aufgabe der vorliegenden Erfindung, die Stabilität und mechanische Festigkeit von gewickelten Faserverbundbauteilen zu verbessern.

Erfindungsgemäß wird diese Aufgabe gelöst durch ein Verfahren mit den Merkmalen des Patentanspruchs 1.

Ein Bauteil aus einem Faserverbundwerkstoff umfasst wenigstens drei übereinander angeordnete Wickellagen aus einem Fasermaterial, wobei jede der Wickellagen eine oder mehr Wickelwindungen umfasst, wobei
- für jede Wickellage, welche mehr als eine Wickelwindung umfasst, gilt, dass alle Wickelwindungen dieser Wickellage den gleichen Wickelwinkel aufweisen und zumindest abschnittsweise unter Ausbildung von Zwischenräumen zwischen den Wickelwindungen voneinander getrennt sind,
- alle Wickelwindungen von wenigstens zwei der Wickellagen jeweils den gleichen ersten Wickelwinkel aufweisen und
- alle der einen oder mehr Wickelwindungen wenigstens einer Wickellage, welche zwischen den wenigstens zwei Wickellagen mit den einen gleichen ersten Wickelwinkel aufweisenden Wickelwindungen angeordnet ist, einen zweiten Wickelwinkel aufweisen, wobei sich der Betrag des zweiten Wickelwinkels von dem Betrag des ersten Wickelwinkels unterscheidet, und wobei sich wenigstens eine der den zweiten Wickelwinkel aufweisenden Wickelwindungen mit wenigstens einer der den ersten Wickelwinkel aufweisenden Wickelwindungen bevorzugt überkreuzt.

Unter einer Wickellage wird/werden im Sinne der vorliegenden Erfindung eine oder mehrere Wickelwindungen verstanden, welche, wenn die Wickellage mehrere Wickelwindungen umfasst, zumindest im Wesentlichen parallel zueinander verlaufen und daher einander nicht überkreuzen. Im einfachsten Fall besteht eine Wickellage daher aus einer Wickelwindung, wobei die Wickelwindungen der an diese Wickellage angrenzenden Wickellagen zwingend einen anderen Wickelwinkel aufweisen, also nicht zumindest im Wesentlichen parallel zu der Wickelwindung der Wickellage verlaufen. Alternativ dazu kann eine Wickellage im Sinne der vorliegenden Erfindung auch mehrere zumindest im Wesentlichen parallel zueinander verlaufende Wickelwindungen, also Wickelwindungen mit jeweils gleichem Wickelwinkel, umfassen, wobei erfindungsgemäß zwischen den einzelnen Wickelwindungen einer Wickellage zumindest abschnittsweise Zwischenräume vorliegen, d.h. die nebeneinander angeordneten Faserstrangabschnitte einer Wickellage weisen - in Draufsicht auf das Bauteil - einen bestimmten, vorzugsweise konstanten, Abstand zueinander auf. Da alle Wickelwindungen einer Wickellage den gleichen Wickelwinkel aufweisen, überkreuzen sich die Wickelwindungen innerhalb einer Wickellage nicht. Vorzugsweise überlappen sich die Wickelwindungen innerhalb einer Wickellage, abgesehen von einem Zentralpunkt, um welchen der Wickelkern beim Wickeln gedreht wird, nicht. An dem vorstehend genannten Zentralpunkt kann eine unweigerliche Überlappung der abgelegten Wickelwindungen eintreten.

Eine Wickelwindung bezeichnet dabei den Abschnitt einer Wickellage, welcher die Umfangsfläche des Wickelkerns bzw. die Umfangsfläche des Bauteils einmal vollständig umläuft. Mit anderen Worten entspricht eine Wickelwindung einem durch einen Doppelhub der Wickelmaschine abgelegten Abschnitt des Fasermaterials.

Unter Wickelwinkel wird derjenige Winkel verstanden, unter welchem die einzelnen Wickelwindungen relativ zu einer im Prinzip beliebigen Referenzachse auf dem Wickelkern abgelegt werden. Mit anderen Worten ist der Wickelwinkel der Winkel, den die Längsachse der Wickelwindung im Augenblick des Ablegens auf den Wickelkern in Bezug auf die Referenzachse einnimmt, auch wenn sich die Orientierung der Wickelwindung durch ein etwaiges Verrutschen des Faserstrangs nach dem Ablegen noch geringfügig verändern kann. Wenn der Wickelkern zylindersymmetrisch ausgestaltet ist, tritt ein Verrutschen des Faserstrangs nicht auf, so dass in diesem Fall der Wickelwinkel der Winkel ist, den die Längsachse der abgelegten Wickelwindung in Bezug auf die Referenzachse einnimmt.

Auf das fertige Bauteil bezogen bedeutet das, dass für Bauteile mit wenigstens einem zylindersymmetrischen Abschnitt, wobei der bzw. die zylindersymmetrischen Abschnitte wenigstens 20 % der Gesamtoberfläche des Bauteils ausmachen, der Wickelwinkel im Sinne der vorliegenden Erfindung der Winkel ist, den die Längsachse des auf dem bzw. den zylindersymmetrischen Abschnitt(en) abgelegten Abschnitts der Wickelwindung in Bezug auf die Referenzachse einnimmt, unabhängig von der Orientierung der Wickelwindung in den von den zylindersymmetrischen Abschnitten verschiedenen Abschnitten des Bauteils. Für alle anderen Bauteile bezeichnet der Begriff Wickelwinkel im Sinne der vorliegenden Erfindung den Winkel zwischen der Wickelwindung und der geodätischen Linie, welche die Umfangsfläche des Wickelkerns bzw. die Umfangsfläche des Bauteils im Falle eines rotationssymmetrischen Wickelkerns bzw. Bauteils parallel zur Rotationsachse des Wickelkerns bzw. Bauteils und im Falle eines nicht-rotationssymmetrischen Wickelkerns bzw. Bauteils parallel zur Längsachse des Wickelkerns bzw. Bauteils vollständig umspannt. Daraus folgt unter Berücksichtigung der vorstehenden Definition des Begriffs Wickelwinkel, dass alle Wickelwindungen im Wesentlichen geradlinig verlaufen, worunter im Sinne der vorliegenden Erfindung verstanden wird, dass die Standardabweichung der an jeder Stelle der Wickelwindung vorliegenden Wickelwinkel dividiert durch den arithmetischen Mittelwert aller entsprechender Wickelwinkel weniger als 0,5 beträgt. Diese zulässige Standardabweichung von einer ideal geradlinigen Ausgestaltung berücksichtigt die Tatsache, dass die Wickelwindungen bei dem Ablegen unter einem definierten Winkel insbesondere an Krümmungsbereichen, wie dem Übergangsbereich zwischen einem zylindrischen Bereich und einem konischen Bereich der Umfangsfläche des Wickelkerns bzw. Bauteils, minimal verrutschen können, wodurch eine gewisse, geringfügige Veränderung in dem Wickelwinkel innerhalb der Wickelwindung auftreten kann. Zusätzlich zu der vorstehenden Standardabweichung gilt gemäß der vorliegenden Erfindung, dass die Differenz zwischen dem maximalen Wickelwinkel und dem minimalen Wickelwinkel jeder Wickelwindung weniger als 1°, bevorzugt höchstens 0,8°, besonders bevorzugt höchstens 0,5° und ganz besonders bevorzugt höchstens 0,2° beträgt.

Wie vorstehend dargelegt, ist der Wickelwinkel aller Wickelwindungen einer Wickellage untereinander gleich. Um wiederum ein mögliches Verrutschen von Abschnitten von einzelnen Wickelwindungen nach dem Ablegen zu berücksichtigen, wird im Sinne der vorliegenden Erfindung unter einem gleichen Wickelwinkel verstanden, dass die Wickelwinkel aller Wickelwindungen innerhalb einer Wickellage, bezogen auf eine geodätische Referenzlinie, welche die Umfangsfläche des Wickelkerns bzw. die Umfangsfläche des Bauteils im Falle eines rotationssymmetrischen Wickelkerns bzw. Bauteils parallel zur Rotationsachse des Wickelkerns bzw. Bauteils und im Falle eines nicht-rotationssymmetrischen Wickelkerns bzw. Bauteils parallel zur Längsachse des Wickelkerns bzw. Bauteils vollständig umspannt, um weniger als 1°, bevorzugt um höchstens 0,8°, besonders bevorzugt um höchstens 0,5° und ganz besonders bevorzugt um höchstens 0,2° voneinander abweichen.

Bei einem erfindungsgemäßen Bauteil befindet sich mithin zwischen wenigstens zwei Wickellagen mit einem gleichen ersten Wickelwinkel eine Wickellage mit einem zweiten anderen Wickelwinkel. Aufgrund der erfindungsgemäß zwischen den einzelnen Wickelwindungen einer Wickellage vorgesehenen Zwischenräume überlagern sich die durch die unterschiedlichen Wickelwinkel eingestellten Wickelmuster dieser Wickellagen verschränkend. Da sich die Beträge des ersten und des zweiten Wickelwinkels unterscheiden, wird beim Übergang der entsprechenden Wickellagen nicht etwa lediglich das Vorzeichen des Wickelwinkels gewechselt, wie dies bei den bekannten Kreuzwicklungen der Fall ist. Erfindungsgemäß liegen somit nicht, wie bei einer Kreuzwicklung, gleichmäßig über den gewickelten Bereich verteilte Überkreuzungen der Wickelwindungen vor; vielmehr liegen in dem erfindungsgemäßen Bauteil ungleichmäßig verteilte Überkreuzungen der einzelnen Wickellagen vor. Dadurch wird unter anderem eine bessere Lastverteilung und somit eine höhere mechanische Festigkeit des Bauteils erreicht. Diese erhöhte mechanische Festigkeit besteht bereits dann, wenn eine einzige vollbedeckende Anordnung von Wickelwindungen vorliegt.

Durch die erfindungsgemäße Art der Anordnung der einzelnen Wickellagen wird die scharfe Trennung der einzelnen Wickellagen, wie sie in den aus dem Stand der Technik bekannten Wicklungen vorliegt, aufgehoben, so dass jeweils die Fasern einer Wickellage in die Zwischenräume einer oder mehr darüber und/oder darunter angeordneter Wickellagen eingreifen. Dadurch bilden sich gewissermaßen gemischte Lagen oder Kombinationslagen aus, wobei im Ergebnis eine einzige kontinuierliche Gesamtwicklung erreicht wird. Es ergibt sich somit eine gewebeähnliche geflochtene Struktur, bei der die interlaminare Bindung im Vergleich zu den entsprechenden, aus dem Stand der Technik bekannten Strukturen verbessert ist.

Während bei gewickelten Faserverbundbauteilen gemäß dem Stand der Technik also deutlich voneinander getrennte Wickellagen vorliegen, die allenfalls über chemische und/oder physikalische Wechselwirkungen aneinander gebunden sind, besteht bei dem erfindungsgemäßen Bauteil eine mechanische Verflechtung oder Verschränkung zwischen den einzelnen Wickellagen, wodurch eine wesentlich höhere Stabilität und mechanische Festigkeit, insbesondere eine verbesserte Schlagzähigkeit und Schadenstoleranz, des Bauteils erreicht wird. Ein erfindungsgemäßes Bauteil kann somit auch für Anwendungen mit höchsten Belastungsanforderungen eingesetzt werden, wie beispielsweise als Beschussplatte.

Die Größe der zwischen den einzelnen Wickelwindungen vorliegenden Zwischenräume, also der Abstand der einzelnen Faserstränge einer Wickellage in Draufsicht auf die Wickellage, sowie die Abfolge der einzelnen Wickelwinkel oder Wickelmuster zwischen den einzelnen Wickellagen kann grundsätzlich abhängig von den Anforderungen der Anwendung in weiten Grenzen variiert werden.

Vorzugsweise ist die aus allen übereinander angeordneten Wickellagen ausgebildete Gesamtwicklung in Draufsicht zwischenraumfrei. Mit anderen Worten bedecken die übereinander angeordneten Wickellagen den umwickelten Abschnitt des Wickelkerns bzw. die umwickelte Umfangsfläche des Bauteils vollständig. Die Wickellagen bilden so eine aussparungsfreie Bauteilwand, beispielsweise als Gefäßwand für einen Tiegel. Die Zwischenräume zwischen den Wickelwindungen einer Wickellage dienen also nicht etwa dazu, ein Bauteil mit gelochter Wand herzustellen, sondern zum verschränkenden Aufnehmen von Wickelwindungen anderer Wickellagen.

Gemäß der Erfindung beträgt in jeder Wickellage, welche mehr als eine Wickelwindung umfasst, das Verhältnis der Summe der Flächen der in der Wickellage zwischen den Wickelwindungen vorliegenden Zwischenräume zu der Gesamtfläche der Wickellage 0,90000 bis 0,99999, besonders bevorzugt 0,99000 bis 0,99999 und ganz besonders bevorzugt 0,99990 bis 0,99999. Derartige Flächenverhältnisse haben sich im Hinblick auf die Stabilität und mechanische Festigkeit des Bauteils als besonders günstig erwiesen.

Erfindungsgemäß weichen die Wickelwinkel aller Wickelwindungen innerhalb einer Wickellage um weniger als 1°, bevorzugt um höchstens 0,8°, besonders bevorzugt um höchstens 0,5° und ganz besonders bevorzugt um höchstens 0,2° voneinander ab. Dies begünstigt eine gleichmäßige mechanische Festigkeit des Bauteils.

Hingegen unterscheidet sich der Betrag des zweiten Wickelwinkels von dem Betrag des ersten Wickelwinkels erfindungsgemäß um wenigstens 3°, ganz besonders bevorzugt um wenigstens 4° und höchst bevorzugt um wenigstens 5°. Um eine ausgeprägte Verschränkung zwischen den Wickellagen zu erreichen ist es nämlich günstig, Anordnungen aus Wickellagen mit allzu ähnlichem Wickelmuster zu vermeiden.

Bevorzugt greift wenigstens eine Wickelwindung wenigstens einer der Wickellagen zumindest abschnittsweise in wenigstens einen Zwischenraum einer unter und/oder über der Wickellage angeordneten Wickellage ein. Die Wickelwindungen der entsprechenden Wickellagen liegen somit nicht streng gestapelt aufeinander, sondern Abschnitte von Wickelwindungen einer Wickellage ragen jeweils in eine andere Wickellage hinein, so dass sich eine feste mechanische Verbindung zwischen den Wickellagen ergibt.

Gemäß einer besonders bevorzugten Ausführungsform der Erfindung greifen alle Wickelwindungen wenigstens einer der Wickellagen mit den den ersten Wickelwinkel aufweisenden Wickelwindungen in die Zwischenräume der wenigstens einen Wickellage mit der wenigstens einen den zweiten Wickelwinkel aufweisenden Wickelwindung und/oder in die Zwischenräume der weiteren Wickellage mit den den ersten Wickelwinkel aufweisenden Wickelwindungen ein. Zu diesem Zweck sind vorzugsweise die den ersten Wickelwinkel aufweisenden Wickelwindungen der einzelnen Wickellagen versetzt zueinander angeordnet, so dass die Wickelwindungen einer der den ersten Wickelwinkel aufweisenden Wickelwindungen enthaltenden Wickellagen über den Zwischenräumen einer anderen der den ersten Wickelwinkel aufweisenden Wickelwindungen enthaltenden Wickellagen angeordnet sind. Dadurch wird ein auf die Umfangsfläche des Wickelkerns bzw. des Bauteils bezogen gleichmäßiges Ineinandergreifen von Wickelwindungen und somit eine besonders hohe Festigkeit des Bauteils erzielt.

Jede der Wickellagen kann 1 bis 2.000, bevorzugt 1 bis 250, besonders bevorzugt 1 bis 150 und ganz besonders bevorzugt 1 bis 10 Wickelwindungen umfassen. Die Anzahl an Wickelwindungen richtet sich im Einzelnen nach den Anforderungen der jeweiligen Anwendung.

Weiterhin umfasst das Bauteil bevorzugt wenigstens 10, bevorzugt 200 bis 10.000, besonders bevorzugt 500 bis 10.000 und ganz besonders bevorzugt 2.000 bis 5.000 übereinander angeordnete Wickellagen. Durch das Anpassen der Anzahl von übereinander angeordneten Wickellagen kann bei vorgegebener Stärke der Faserstränge eine gewünschte Wanddicke bzw. eine gewünschte mechanische Festigkeit des Bauteils erreicht werden.

Gemäß einer weiteren bevorzugten Ausführungsform der Erfindung sind jeweils eine Wickellage mit den den ersten Wickelwinkel aufweisenden Wickelwindungen und eine Wickellage mit den den zweiten Wickelwinkel aufweisenden Wickelwindungen in wechselnder Abfolge übereinander angeordnet, und zwar besonders bevorzugt direkt übereinander angeordnet. Bei dieser Ausführungsform ähnelt das resultierende Wickelmuster einer Kreuzwicklung, wobei jedoch im Gegensatz zu einer Kreuzwicklung durch die betragsmäßig unterschiedlichen Wickelwinkel der gewünschte Verschränkungseffekt erzielt wird.

Es kann auch zwischen den wenigstens zwei Wickellagen mit den den ersten Wickelwinkel aufweisenden Wickelwindungen abgesehen von der Wickellage mit den den zweiten Wickelwinkel aufweisenden Wickelwindungen wenigstens eine zusätzliche Wickellage angeordnet sein. Durch Vorsehen derartiger "Zwischenlagen" können die mechanischen Eigenschaften des Bauteils in einer gewünschten Weise beeinflusst werden. Dabei kann die wenigstens eine zusätzliche Wickellage eine oder mehrere Wickelwindungen umfassen, wobei alle dieser Wickelwindungen einen dritten Wickelwinkel aufweisen, dessen Betrag sich von dem Betrag des ersten Wickelwinkels und von dem Betrag des zweiten Wickelwinkels unterscheidet. Auf diese Weise können drei oder mehr unterschiedliche Wickelwinkel miteinander kombiniert werden, um so den Verschränkungseffekt zwischen den Wickellagen und somit die Bauteilfestigkeit weiter zu erhöhen.

Vorzugsweise überkreuzen sich alle den zweiten Wickelwinkel aufweisenden Wickelwindungen mit wenigstens einer der den ersten Wickelwinkel aufweisenden Wickelwindung. Es sind also nicht etwa die den zweiten Wickelwinkel aufweisenden Wickelwindungen räumlich entfernt von den den ersten Wickelwinkel aufweisenden Wickelwindungen auf dem Wickelkern angeordnet: Vielmehr überlagern sich die Wickelwindungen mit unterschiedlichem Wickelwinkel auf ein und demselben Abschnitt des Wickelkerns bzw. des Bauteils, wobei sich aufgrund der unterschiedlichen Wickelwinkel unweigerlich Überkreuzungen ergeben, welche letztlich die Verbindung zwischen den Wickellagen verbessern.

Bevorzugt sind die Fasern aus der Gruppe ausgewählt, welche aus Carbonfasern, Keramikfasern, Glasfasern, Polymerfasern und Mischungen aus zwei oder mehr der vorgenannten Materialien besteht, wobei die Polymerfasern vorzugsweise Polyamidfasern, insbesondere Aramidfasern, Polyesterfasern, Polypropylenfasern, Polyacrylnitrilfasern, Fasern aus oxidiertem Polyacrylnitril sowie Fasern aus Copolymeren von zwei oder mehr der vorgenannten Materialien und Mischungen aus zwei oder mehr der vorgenannten Materialien sind. Derartige Fasermaterialien sind dazu geeignet, gewickelte Bauteile mit hoher mechanischer Festigkeit zu schaffen. Dabei kann der mittlere Durchmesser der Fasern beispielsweise im Mittel 3 bis 20 µm betragen. Es können auch Faserbündel eingesetzt werden, wobei die mittlere Anzahl an Fasern pro abgelegten Faserbündel zwischen 500 bis 400.000, bevorzugt zwischen 1.000 bis 50.000 und besonders bevorzugt zwischen 3.000 und 50.000 betragen kann.

Ein erfindungsgemäßes Bauteil kann insbesondere aus einem carbonfaserverstärkten Kohlenstoff (CFC), einem carbonfaserverstärkten Kunststoff (CFK), einer carbonfaserverstärkten Keramik oder einer keramikfaserverstärkten Keramik (CMC) bestehen. Derartige Verbundwerkstoffe zeichnen sich unter anderem durch eine hohe mechanische und thermische Stabilität, eine hohe Schockbeständigkeit, eine hohe chemische Beständigkeit sowie eine hohe chemische Reinheit aus.

Die übereinander angeordneten Wickellagen bilden vorzugsweise eine freitragende Wicklung. D.h. der zum Aufwickeln des Fasermaterials verwendete Wickelkern wird noch vor Abschließen der Herstellung des Bauteils entfernt, so dass sich ein von den Wickellagen umhüllter Hohlraum bildet. Das Bauteil kann auf diese Weise als Hohlprofil oder als Behälter eingesetzt werden.

Gemäß einer weiteren konkreten Ausgestaltung ist das Bauteil als Tiegel zum Schmelzen und Kristallisieren eines Metalls und/oder Halbmetalls ausgebildet.

Das erfindungsgemäße Verfahren zum Herstellen eines Bauteils aus einem Faserverbundwerkstoff, bei dem wenigstens drei Wickellagen eines Fasermaterials auf einen Wickelkern gewickelt werden, umfasst zumindest die Merkmale gemäß Anspruch 1.

Die Überlagerung von unterschiedlichen Wickelmustern ermöglicht in Verbindung mit den innerhalb der Wickellagen belassenen Zwischenräumen ein Ineinandergreifen der einzelnen Wickellagen und somit einen gewissen Verschränkungs- oder Verflechtungseffekt, welcher die mechanische Stabilität des hergestellten Bauteils erhöht.

Bevorzugt werden die Wickelwindungen der wenigstens drei Wickellagen derart auf den Wickelkern gewickelt, dass sie zumindest einen Abschnitt des Wickelkerns vollständig bedecken. Dieser Abschnitt des Wickelkerns bildet am fertigen Bauteil eine durchgehende, aussparungsfreie Wand.

Für jede Wickellage können die Wickelwindungen aus dem Fasermaterial jeweils zumindest abschnittsweise unter Ausbildung von Zwischenräumen zwischen den Wickelwindungen voneinander getrennt so auf den Wickelkern gewickelt werden, dass das Verhältnis der Summe der Flächen der in der Wickellage zwischen den Wickelwindungen vorliegenden Zwischenräume zu der Gesamtfläche der Wickellage 0,90000 bis 0,99999, besonders bevorzugt 0,99000 bis 0,99999 und ganz besonders bevorzugt 0,99990 bis 0,99999 beträgt. Derartige Flächenverhältnisse haben sich im Hinblick auf die Stabilität des Bauteils als besonders günstig erwiesen.

Ein erfindungsgemäßes Verfahren kann als weitere Schritte umfassen:
- Imprägnieren des Fasermaterials vor, während oder nach dem Wickeln mit Bindemittel und
- Aushärten des Bindemittels nach dem Imprägnieren und nach dem Wickeln des Fasermaterials.

Vorzugsweise erfolgt das Imprägnieren des Fasermaterials während dem Wickeln. Alternativ dazu kann das Wickeln aber auch mit bereits vorimprägniertem und/oder stabilisiertem Fasermaterial (Prepregs) erfolgen. Grundsätzlich können alle dem Fachmann bekannten Bindemittel eingesetzt werden, wobei gute Ergebnisse insbesondere erhalten werden, wenn das Matrixmaterial aus der Gruppe ausgewählt wird, welche aus Epoxidharzen, Phenolharzen, Vinylesterharzen, Polyesterharzen, Polyurethanharzen, Benzoxazinharzen, Novolaken, Cyanatesterharzen, Bismaleimidharzen, Bisoxazolinen, Polyolefinen, wie beispielsweise Polypropylen, technischen Thermoplasten, wie beispielsweise Polyamiden, und beliebigen Mischungen von zwei oder mehr der vorgenannten Materialien besteht. Weiterhin können die Bindemittel geeignete Füllstoffe, wie beispielsweise Carbon- oder Graphitpartikel oder gemahlene oder kurzgeschnittene Fasern, aufweisen. Zudem kann dem Bindemittel ein geeignetes Additiv, wie zum Beispiel Härter, Beschleuniger, Emulgatoren, interne Trennmittel und dergleichen zugesetzt sein.

Das Aushärten kann je nach Art des Bindemittels thermisch und/oder chemisch erfolgen.

Nach dem Aushärten kann eine Carbonisierung und/oder Graphitierung durchgeführt werden, um das Matrixmaterial in Kohlenstoff zu verwandeln. Auf diese Weise können carbonfaserverstärkte Kohlenstoffverbundwerkstoffe hergestellt werden. Dabei wird die Carbonisierung vorzugsweise bei einer Temperatur von 400 bis 1.200 °C und besonders bevorzugt von 600 bis 1.000°C durchgeführt, wohingegen die Graphitierung bevorzugt bei einer Temperatur von 1.400 bis 3.000 °C und besonders bevorzugt von 1.600 bis 2.400 °C durchgeführt wird.

Um den Kohlenstoffgehalt der Matrix weiterhin zu erhöhen bzw. die Dichte der Faserverbundwerkstoffe zu erhöhen, können nach der Carbonisierung bzw. Graphitierung noch ein oder mehrere Flüssigverdichtungsschritte unter Verwendung geeigneter Harzen und/oder Peche durchgeführt werden. Nach jedem solchen Flüssigverdichtungsschritt wird eine Carbonisierung und/oder Graphitierung durchgeführt. Es kann auch ein Verfahren nach dem CVI-Prinzip (chemische Dampfinfiltration bzw. "Chemical Vapor Infiltration") eingesetzt werden, um den Kohlenstoffanteil in der Matrix weiter zu erhöhen.

Gemäß einer konkreten Ausgestaltung der Erfindung werden zum Wickeln Carbonfasern enthaltende Endlosfaserstränge auf dem Wickelkern abgelegt.

Vor dem Wickeln der Wickellagen auf den Wickelkern kann insbesondere ein Programm erstellt und/oder konfiguriert werden, welches das Wickeln betreffende Steueranweisungen für eine automatische Wickelmaschine enthält, wobei das Wickeln der Wickelwindungen durch Ausführen der Steueranweisungen erfolgt. Der Wickelvorgang an sich kann dann vollautomatisch erfolgen.

Nachfolgend wird die Erfindung anhand von diese erläuternden, diese aber nicht einschränkenden Beispielen unter Bezugnahme auf die Zeichnungen weiter beschrieben.
- Fig. 1: ist eine Seitenansicht eines Wickelkerns, auf den eine erste Wickellage eines Fasermaterials gemäß eines ersten Ausführungsbeispiels gewickelt ist.
- Fig. 2: zeigt den Wickelkern gemäß Fig. 1 mit einer zusätzlichen zweiten, über die erste Wickellage gewickelten Wickellage.
- Fig. 3: zeigt den Wickelkern gemäß Fig. 1 mit einer zusätzlichen dritten, über die zweite Wickellage gewickelten Wickellage.
- Fig. 4: zeigt den Wickelkern gemäß Fig. 1 mit einer zusätzlichen vierten, über die dritte Wickellage gewickelten Wickellage.
- Fig. 5: ist eine Seitenansicht eines Wickelkerns, auf welchen zwei übereinander angeordnete Wickellagen eines Fasermaterials gemäß eines zweiten Ausführungsbeispiels gewickelt sind.
- Fig. 6: ist eine perspektivische Darstellung des Wickelkerns gemäß Fig. 5.
- Fig. 7: ist eine weitere perspektivische Darstellung des Wickelkerns gemäß Fig. 5.
- Fig. 8: ist eine Seitenansicht eines Abschnitts eines auf einem Wickelkern abgelegten Wickelmusters gemäß eines anderen Ausführungsbeispiels.
- Fig. 9a bis 9d: zeigen Seitenansichten eines Abschnitts eines Wickelkerns, auf den zwei Wickellagen eines Fasermaterials (Fig. 9a), vier Wickellagen eines Fasermaterials (Fig. 9b), sechs Wickellagen eines Fasermaterials (Fig. 9c) und acht Wickellagen eines Fasermaterials (Fig. 9d) gemäß eines anderen Ausführungsbeispiels gewickelt sind.

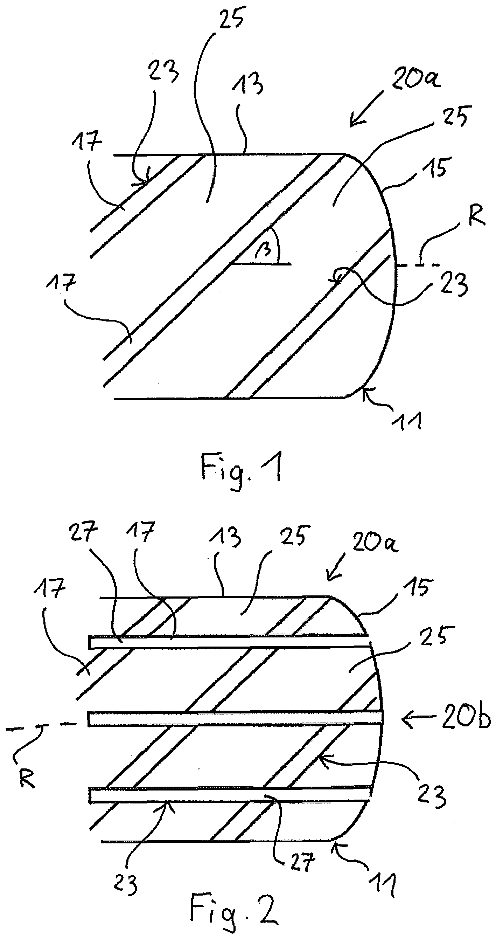

Gemäß einem in den Fig. 1 bis 4 dargestellten ersten Ausführungsbeispiel wird ein Tiegel zum Schmelzen eines Metalls aus einem Faserverbundwerkstoff hergestellt, indem mehrere Wickellagen eines Fasermaterials auf einen Wickelkern oder Wickeldorn 11 gewickelt werden. Der lediglich teilweise dargestellte Wickelkern 11 ist ein metallischer Hohlkörper mit einem zylindrischen Mantelabschnitt 13 und einem kuppelförmigen Deckabschnitt 15. Auf einem nicht dargestellten Traggestell ist der Wickelkern 11 um eine Rotationsachse R drehbar gelagert, wobei ein ebenfalls nicht dargestellter beweglicher Zuführungskopf einer Wickelmaschine so angeordnet ist, dass er aus mit Bindemittel imprägnierten Carbonfasern zusammengesetzten Endlosfaserstränge 17 auf dem Wickelkern 11 ablegen kann. Es entstehen auf diese Weise Wickelwindungen 23, welche den Wickelkern 11 jeweils einmal vollständig umlaufen. Während dem Ablegen werden die Endlosfaserstränge 17 mit einem härtbaren Bindemittel auf Polymerbasis imprägniert.

Durch Bewegen des Zuführungskopfes und durch Drehen des Wickelkerns 11 um die Rotationsachse R wird beim Ablegen der imprägnierten Endlosfaserstränge 17 eine bestimmter Wickelwinkel β zwischen einer Wickelwindung 23 und der geodätischen Linie, welche die Umfangsfläche des Wickelkerns 11 parallel zur Rotationsachse R vollständig umspannt, eingestellt.

Auf diese Weise wird eine erste Wickellage 20a gewickelt, deren Wickelwindungen 23 alle einen Wickelwinkel β von 45° aufweisen. Die Endlosfaserstränge 17 werden beabstandet voneinander abgelegt, so dass zwischen den einzelnen Wickelwindungen 23 Zwischenräume 25 bestehen.

Um einen vorbestimmten Wickelwinkel zu realisieren, welcher aufgrund einer relativ geringen Rutschreibung der Wickellage auf dem Wickelkern bzw. auf den vorhergehenden Wickellagen nicht zugänglich wäre, können zudem auch Stifte bzw. Stiftkranz auf dem Wickelkern vorgesehen sein, welche die Wickellage in einer geeigneten Position in Bezug zum Wickelkern halten bzw. stabilisieren. Die Verwendung von Stiften ist auch besonders dann vorteilhaft, wenn die Änderung im Wickelwinkel von einer Wickellage zu einer nächsten derart groß ist, dass aufgrund der relativ geringen Rutschreibung kein stabiler Halt der Wickellagen auf dem Wickelkern bzw. den vorhergehenden Wickellagen möglich wäre.

Anschließend wird gemäß der Fig. 2 eine zweite Wickellage 20b über die erste Wickellage 20a auf den Wickelkern 11 gewickelt, wobei die Wickelwindungen 23 dieser zweiten Wickellage 20b einen Wickelwinkel von 0° aufweisen.

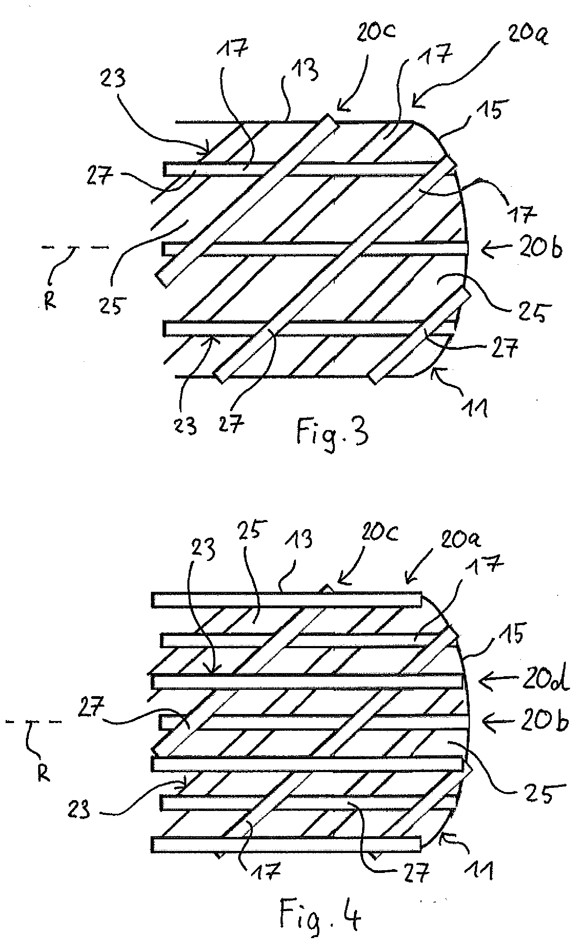

Über die zweite Wickellage 20b wird nachfolgend gemäß der Fig. 3 eine dritte Wickellage 20c auf den Wickelkern 11 gewickelt. Die Wickelwindungen 23 der dritten Wickellage 20c weisen wie die Wickelwindungen 23 der ersten Wickellage 20a einen Wickelwinkel von 45° auf, sind jedoch relativ zu den Wickelwindungen 23 der ersten Wickellage 20a versetzt, so dass sie sich über den Zwischenräumen 25 der ersten Wickellage 20a befinden. Dabei werden die Wickelwindungen 23 der zweiten Wickellage 20b bis zu einem gewissen Grad in die Zwischenräume 25 hineingedrückt.

Weiterhin wird gemäß Fig. 4 eine vierte Wickellage 20d über die dritte Wickellage 20c auf den Wickelkern 11 gewickelt. Die Wickelwindungen 23 der vierten Wickellage 20d weisen wie die Wickelwindungen 23 der zweiten Wickellage 20b einen Wickelwinkel von 0° auf, sind jedoch relativ zu den Wickelwindungen 23 der zweiten Wickellage 20b versetzt, so dass sie sich über den Zwischenräumen 25 der zweiten Wickellage 20b befinden. Die Wickelwindungen 23 der dritten Wickellage 20b werden dadurch wiederum in entsprechende darunterliegende Zwischenräume 25 hineingedrückt.

Aufgrund der beiden unterschiedlichen Wickelwinkel überkreuzen sich die Wickelwindungen 23 der ersten Wickellage 20a mit den Wickelwindungen 23 der zweiten Wickellage 20b und der vierten Wickellage 20d. Ebenso überkreuzen sich die Wickelwindungen 23 der dritten Wickellage 20c mit den Wickelwindungen 23 der zweiten Wickellage 20b und der vierten Wickellage 20d.

Die beiden einander abwechselnden Wickelwinkel von 0° und 45° sind lediglich beispielhaft gewählt. Ein alternatives Ausführungsbeispiel der Erfindung sieht vor, dass die Wickelwindungen 23 der ersten, zweiten, dritten und vierten Wickellage 20a, 20b, 20c, 20d Wickelwinkel aufweisen, welche 0,3°, 2°, 5° und 6° betragen.

Es werden dann weitere Wickellagen über die bestehenden Wickellagen 20a, 20b, 20c, 20d gewickelt, bis die Wickelwindungen 23 aller übereinander angeordneten Wickellagen den Mantelabschnitt 13 und den Deckabschnitt 15 des Wickelkerns 11 vollständig bedecken.

Schließlich wird das Bindemittel der imprägnierten Endlosfaserstränge 17 thermisch oder chemisch ausgehärtet und der Wickelkern 11 wird entfernt. Dies kann beispielsweise dadurch erfolgen, dass ein dem Deckabschnitt 15 entgegengesetzter Abschnitt der entstandenen Wicklung abgetrennt und der Wickelkern 11 von der Wicklung abgezogen wird, so dass ein Hohlkörper aus übereinander angeordneten Wickellagen entsteht, welcher den Tiegel bildet. Vor oder nach dem Entfernen des Wickelkerns 11 kann zudem eine Carbonisierung und/oder Graphitierung erfolgen, um das Bindemittel in amorphen Kohlenstoff bzw. Graphit umzuwandeln.

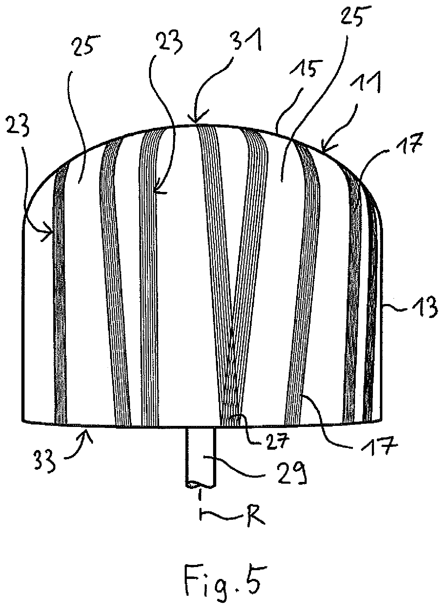

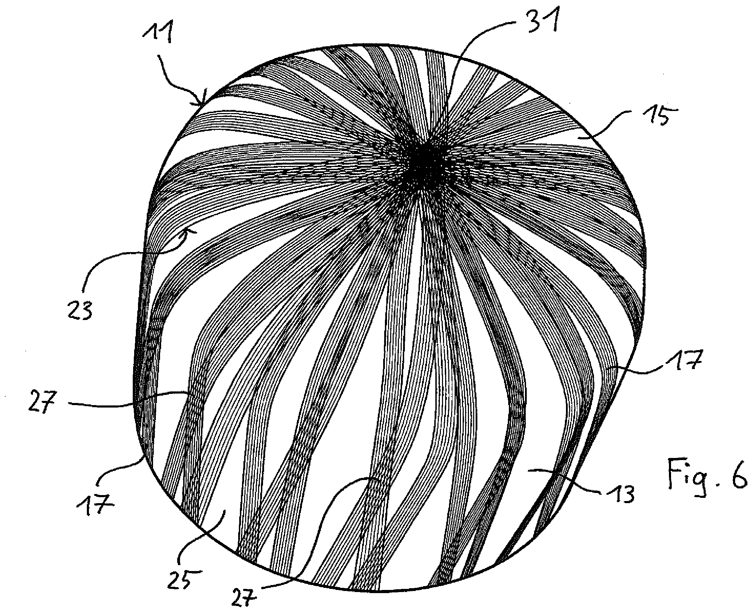

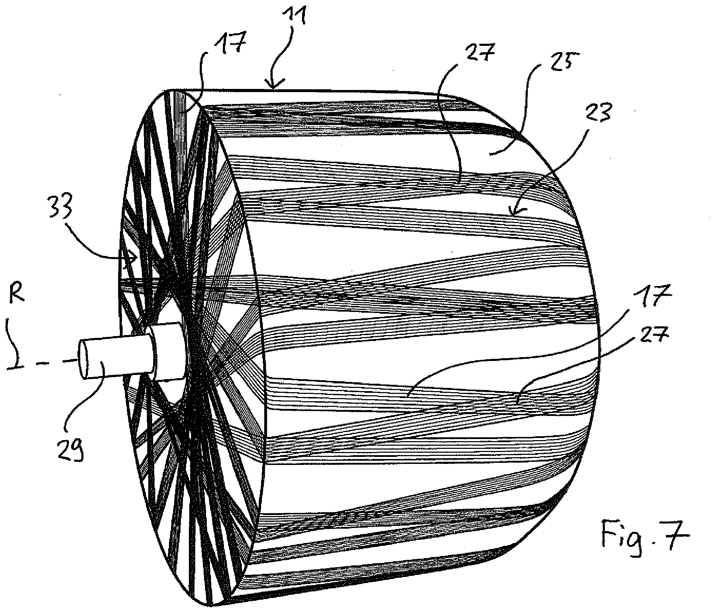

Die Fig. 5 bis 7 zeigen einen weiteren Wickelkern 11 mit abgelegten mit Bindemittel imprägnierten Endlosfasersträngen 17, wobei hier erkennbar ist, dass die Wickelwindungen über eine stirnseitige Öffnung 33 des Wickelkerns 11 hinweggeführt sind. Durch die Öffnung 33 hindurch erstreckt sich eine drehbare Welle 29, welche die Rotationsachse R definiert. Aus der Fig. 6 geht außerdem hervor, dass sich anders als bei dem in den Fig. 1 bis 4 dargestellten Ausführungsbeispiel alle Wickelwindungen 23 an einem Zentralpunkt 31, an welchem die Rotationsachse R den Deckabschnitt 15 des Wickelkerns 11 durchstößt, überkreuzen.

Zum automatischen Durchführen des Wickelns wird vor dem Wickeln der Wickelwindungen 23 auf den Wickelkern 11 ein Computerprogramm erstellt und/oder konfiguriert, welches das Wickeln betreffende Steueranweisungen für die Antriebe der drehbaren Welle 29 und den Zuführungskopf enthält. Das vorstehend beschriebene Wickeln der Wickelwindungen 23 erfolgt dann vollautomatisch durch Ausführen der Steueranweisungen.

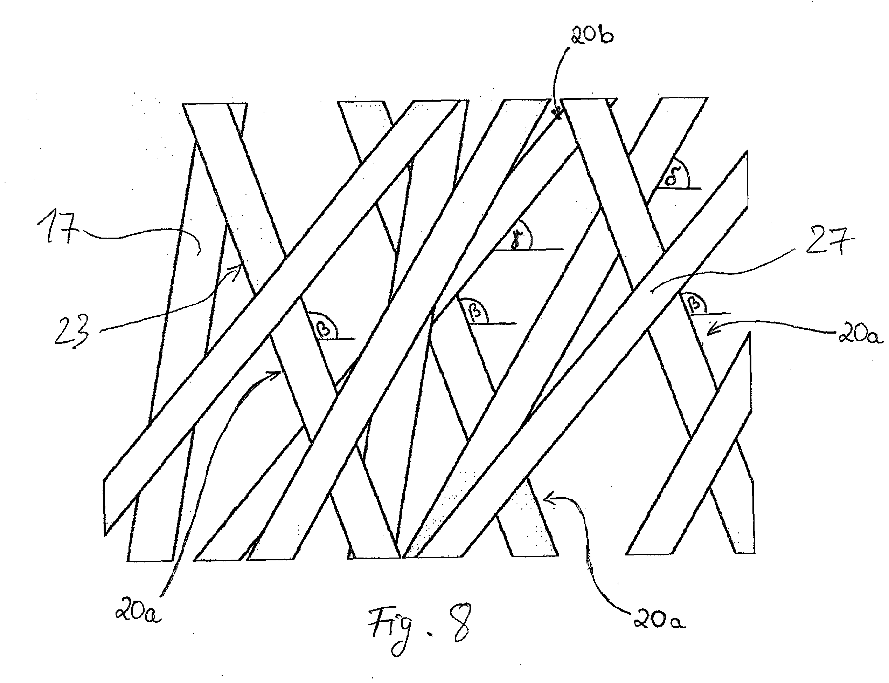

In der Fig. 8 ist eine Seitenansicht eines Abschnitts eines auf einem Wickelkern abgelegten Wickelmusters gemäß eines anderen Ausführungsbeispiels gezeigt. Aus dieser Fig. ist ersichtlich, wie sich die einzelnen Wickellagen 20a, 20b aus Wickelwindungen 23 mit sich jeweils betragsmäßig unterscheidendem Wickelwinkel überkreuzen, wobei die Überkreuzungen ungleichmäßig verteilt vorliegen, wodurch der erfindungsgemäß gewünschte Verschränkungseffekt erzielt wird, aufgrund dem die mechanische Stabilität und mechanische Festigkeit, insbesondere Schlagzähigkeit und Schadenstoleranz, des Bauteils erhöht werden.

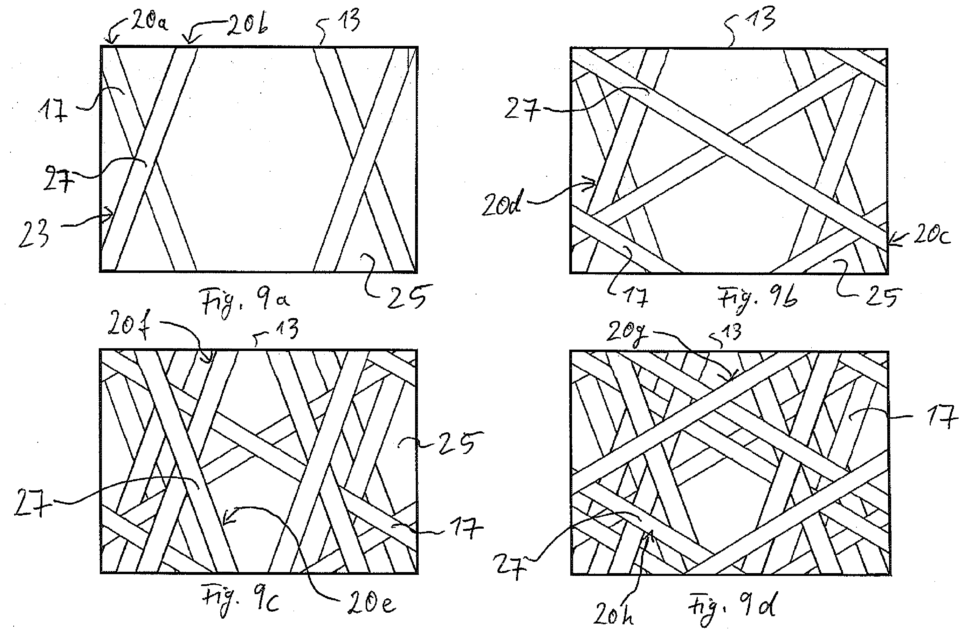

In den Fig. 9a bis 9d sind Seitenansichten eines Abschnitts eines Wickelkerns gezeigt, wobei auf dem in der Fig. 9a gezeigten Wickelkernabschnitt zwei Wickellagen 20a, 20b abgelegt sind, auf dem in der Fig. 9b gezeigten Wickelkernabschnitt vier Wickellagen 20a, 20b, 20c, 20d abgelegt sind, auf dem in der Fig. 9c gezeigten Wickelkernabschnitt sechs Wickellagen 20a, 20b, 20c, 20d, 20e, 20f abgelegt sind und auf dem in der Fig. 9d gezeigten Wickelkernabschnitt acht Wickellagen 20a, 20b, 20c, 20d, 20e, 20f, 20g, 20h abgelegt sind. Jeweils zwei dieser Wickellagen 20a und 20b bzw. 20c und 20d bzw. 20e und 20f bzw. 20g und 20h weisen betragsmäßig denselben Wickelwinkel auf, der sich jedoch hinsichtlich des Vorzeichens unterscheidet, wohingegen die anderen Wickellagen jeweils einen sich betragsmäßig von diesem unterscheidenden Wickelwinkel aufweisen. Bei diesen Kreuzwickellagen handelt es sich im Sinne der vorliegenden Erfindung um jeweils zwei verschiedene Wickellagen. Auch bei diesem Wickelmuster ergeben sich ungleichmäßig verteilte Überkreuzungen, wodurch der erfindungsgemäß gewünschte Verschränkungseffekt erzielt wird, aufgrund dem die mechanische Stabilität und mechanische Festigkeit, insbesondere Schlagzähigkeit und Schadenstoleranz, des Bauteils erhöht werden.

### Bezugszeichenliste:

- 11: Wickelkern
- 13: Mantelabschnitt
- 15: Deckabschnitt
- 17: Endlosfaserstrang
- 20a, 20b, 20c, 20d: Wickellage
- 20e, 20f, 20g, 20h: Wickellage
- 23: Wickelwindung
- 25: Zwischenraum
- 27: Überkreuzungspunkt
- 29: drehbare Welle
- 31: Zentralpunkt
- 33: stirnseitige Öffnung
- R: Rotationsachse
- β, γ, δ: Wickelwinkel

## Patentansprüche

1. Verfahren zum Herstellen eines Bauteils aus einem Faserverbundwerkstoff, bei dem wenigstens drei Wickellagen (20a, 20b, 20c, 20d) eines Fasermaterials auf einen Wickelkern (11) gewickelt werden, wobei:
- für jede der wenigstens drei Wickellagen (20a, 20b, 20c, 20d) eine oder mehrere Wickelwindungen (23) gewickelt werden, wobei alle Wickelwindungen (23) einer Wickellage (20a, 20b, 20c, 20d), welche mehr als eine Wickelwindung (23) aufweist, mit dem gleichen Wickelwinkel (β) und zumindest abschnittsweise unter Ausbildung von Zwischenräumen (25) zwischen den Wickelwindungen (23) voneinander getrennt auf den Wickelkern (11) gewickelt werden,
- die Wickelwindungen (23) von wenigstens zwei der Wickellagen (20a, 20c) mit dem gleichen ersten Wickelwinkel (β) auf den Wickelkern (11) gewickelt werden und
- alle der einen oder mehr Wickelwindungen (23) wenigstens einer Wickellage (20b) mit einem zweiten Wickelwinkel (γ), dessen Betrag sich von dem Betrag des ersten Wickelwinkels (β) unterscheidet, derart auf den Wickelkern (11) gewickelt werden, dass diese Wickellage (20b) zwischen den wenigstens zwei Wickellagen (20a, 20c) mit den den ersten Wickelwinkel (β) aufweisenden Wickelwindungen (23) angeordnet ist und sich wenigstens eine der den zweiten Wickelwinkel (γ) aufweisenden Wickelwindungen (23) mit wenigstens einer der den ersten Wickelwinkel (β) aufweisenden Wickelwindungen (23) überkreuzt
**dadurch gekennzeichnet, dass**
- das Verhältnis der Summe der Flächen der in der Wickellage (20a, 20b, 20c, 20d) zwischen den Wickelwindungen (23) vorliegenden Zwischenräume zu der Gesamtfläche der Wickellage (20a, 20b, 20c, 20d) 0,90000 bis 0,99999 beträgt,
- die Wickelwinkel aller Wickelwindungen innerhalb einer Wickellage um weniger als 1° voneinander abweichen
- und sich der Betrag des zweiten Wickelwinkels von dem Betrag des ersten Wickewinkels um wenigstens 3° unterscheidet so dass ungleichmäßig verteilte Überkreuzungen der einzelnen Wickellagen vorliegen.

2. Verfahren nach Anspruch 1,
**dadurch gekennzeichnet, dass**
die Wickelwindungen (23) der wenigstens drei Wickellagen (20a, 20b, 20c, 20d) derart auf den Wickelkern (11) gewickelt werden, dass sie zumindest einen Abschnitt des Wickelkerns (11) vollständig bedecken.

3. Verfahren nach Anspruch 1 oder 2,
**dadurch gekennzeichnet, dass**
für jede Wickellage (20a, 20b, 20c, 20d) wenigstens zwei Wickelwindungen (23) des Fasermaterials jeweils zumindest abschnittsweise unter Ausbildung von Zwischenräumen (25) zwischen den Wickelwindungen (23) voneinander getrennt so auf den Wickelkern (11) gewickelt werden, dass das Verhältnis der Summe der Flächen der in der Wickellage (20a, 20b, 20c, 20d) zwischen den Wickelwindungen (23) vorliegenden Zwischenräume zu der Gesamtfläche der Wickellage (20a, 20b, 20c, 20d) 0,99000 bis 0,99999 beträgt.

4. Verfahren nach Anspruch 1 bis 3,
**dadurch gekennzeichnet, dass**
für jede Wickellage (20a, 20b, 20c, 20d) wenigstens zwei Wickelwindungen (23) des Fasermaterials jeweils zumindest abschnittsweise unter Ausbildung von Zwischenräumen (25) zwischen den Wickelwindungen (23) voneinander getrennt so auf den Wickelkern (11) gewickelt werden, dass das Verhältnis der Summe der Flächen der in der Wickellage (20a, 20b, 20c, 20d) zwischen den Wickelwindungen (23) vorliegenden Zwischenräume zu der Gesamtfläche der Wickellage (20a, 20b, 20c, 20d) 0,99990 bis 0,99999 beträgt

5. Verfahren nach zumindest einem der Ansprüche 1 bis 4,
**gekennzeichnet durch** die weiteren Schritte:
- Imprägnieren des Fasermaterials vor, während oder nach dem Wickeln mit Bindemittel und
- Aushärten des Bindemittels nach dem Imprägnieren und nach dem Wickeln des Fasermaterials.

6. Verfahren nach Anspruch 5,
**dadurch gekennzeichnet, dass**
das Aushärten thermisch und/oder chemisch erfolgt.

7. Verfahren nach zumindest einem der Ansprüche 1 bis 6,
**dadurch gekennzeichnet, dass**
zum Wickeln Carbonfasern enthaltende Endlosfaserstränge (17) auf dem Wickelkern (11) abgelegt werden.

8. Verfahren nach zumindest einem der Ansprüche 1 bis 7,
**dadurch gekennzeichnet, dass**
vor dem Wickeln der Wickellagen (20a, 20b, 20c, 20d) auf den Wickelkern (11) ein Programm erstellt und/oder konfiguriert wird, welches das Wickeln betreffende Steueranweisungen für eine automatische Wickelmaschine enthält, wobei das Wickeln der Wickelwindungen (23) durch Ausführen der Steueranweisungen erfolgt.

## Claims

1. Method for producing a component from a fibre composite, in which at least three winding layers (20a, 20b, 20c, 20d) of a fibre material are wound onto a winding core (11), wherein:
- for each of the at least three winding layers (20a, 20b, 20c, 20d) one or a plurality of winding turns (23) are wound, wherein all the winding turns (23) of a winding layer (20a, 20b, 20c, 20d) which has more than one winding turn (23) are wound, separately from each other, with the same winding angle (β) and under formation of spaces (25) between the winding turns (23) at least in portions, onto the winding core (11),
- the winding turns (23) of at least two of the winding layers (20a, 20c) having the same first winding angle (β) are wound onto the winding core (11), and
- all of the one or more winding turns (23) of at least one winding layer (20b) having a second winding angle (γ), which value is different from the value of the first winding angle (β), are wound onto the winding core (11) in such a way that this winding layer (20b) is arranged between the at least two winding layers (20a, 20c) with winding turns (23) having the first winding angle (β), and that at least one of the second winding turns (23) having the second winding angle (γ) intersects with at least one of the winding turns (23) having the first winding angle (β), **characterised in that**
- the ratio of the sum of the area of the spaces present in the winding layer (20a, 20b, 20c, 20d) between the winding turns (23) and the total area of the winding layer (20a, 20b, 20c, 20d) is 0.90000 to 0.99999,
- the winding angles of all the winding turns within a winding layer differ from each other by less than 1°,
- and the value of the second winding angle differs from the value of the first winding angle by at least 3°, so that unevenly distributed intersections of the individual winding layers are present.

2. Method according to claim 1, **characterised in that** the winding turns (23) of the at least three winding layers (20a, 20b, 20c, 20d) are wound onto the winding core (11) in such a way that they completely cover at least a portion of the winding core (11).

3. Method according to either claim 1 or claim 2, **characterised in that** for each winding layer (20a, 20b, 20c, 20d) at least two winding turns (23) of the fibre material are wound, separately from each other, under formation of spaces (25) between the winding turns (23) at least in portions, onto the winding core (11), so that the ratio of the sum of the area of the spaces present in the winding layer (20a, 20b, 20c, 20d) between the winding turns (23) and the total area of the winding layer (20a, 20b, 20c, 20d) is 0.99000 to 0.99999.

4. Method according to claims 1 to 3, **characterised in that** for each winding layer (20a, 20b, 20c, 20d) at least two winding turns (23) of the fibre material are wound, separately from each other, under formation of spaces (25) between the winding turns (23) at least in portions, onto the winding core (11), so that the ratio of the sum of the area of the spaces present in the winding layer (20a, 20b, 20c, 20d) between the winding turns (23) and the total area of the winding layer (20a, 20b, 20c, 20d) is 0.99990 to 0.99999.

5. Method according to at least one of claims 1 to 4, **characterised by** the further steps of:
- impregnating the fibre material before, during or after winding with binder, and
- curing the binder after impregnation and after the winding of the fibre material.

6. Method according to claim 5, **characterised in that** the curing takes place thermally and/or chemically.

7. Method according to at least one of claims 1 to 6, **characterised in that** for the winding, carbon fibres containing continuous fibre strands (17) are deposited onto the winding core (11).

8. Method according to at least one of claims 1 to 7, **characterised in that** before winding the winding layers (20a, 20b, 20c, 20d) onto the winding core (11), a program is created and/or configured, which contains winding control instructions for an automatic winding machine, wherein the winding of the winding turns (23) takes place by executing the control instructions.

## Revendications

1. Procédé de fabrication d'un composant à partir d'un matériau composite fibreux, dans lequel au moins trois couches d'enroulement (20a, 20b, 20c, 20d) d'une matière fibreuse sont enroulées sur un noyau d'enroulement (11), dans lequel :
- une ou plusieurs spires d'enroulement (23) sont enroulées pour chacune des au moins trois couches d'enroulement (20a, 20b, 20c, 20d), toutes les spires d'enroulement (23) d'une couche d'enroulement (20a, 20b, 20c, 20d) qui présente plusieurs spires d'enroulement (23) étant enroulées sur le noyau d'enroulement (11) séparément les unes des autres, suivant le même angle d'enroulement (β) et en formant au moins par sections des espaces intermédiaires (25) entre les spires d'enroulement (23),
- les spires d'enroulement (23) d'au moins deux des couches d'enroulement (20a, 20c) sont enroulées sur le noyau d'enroulement (11) suivant le même premier angle d'enroulement (β), et
- la totalité des une ou plusieurs spires d'enroulement (23) d'au moins une couche d'enroulement (20b) sont enroulées sur les noyaux d'enroulement (11) suivant un second angle d'enroulement (γ) dont la valeur diffère de la valeur du premier angle d'enroulement (β), de sorte que cette couche d'enroulement (20b) est disposée entre les au moins deux couches d'enroulement (20a, 20c) avec les spires d'enroulement (23) présentant le premier angle d'enroulement (β), et au moins l'une des deux spires d'enroulement (23) présentant le second angle d'enroulement (γ) se croise avec au moins l'une des spires d'enroulement (23) présentant le premier angle d'enroulement (β), **caractérisé en ce que**
- le rapport entre la somme des surfaces des espaces intermédiaires présents dans la couche d'enroulement (20a, 20b, 20c, 20d) entre les spires d'enroulement (23) et la surface totale de la couche d'enroulement (20a, 20b, 20c, 20d) est de 0,90000 à 0,99999.
- les angles d'enroulement de toutes les spires d'enroulement à l'intérieur d'une couche d'enroulement s'écartent les uns des autres de moins de 1°,
- et la valeur du second angle d'enroulement diffère d'au moins 3° de la valeur du premier angle d'enroulement, de sorte qu'il existe des croisements inégalement répartis des couches d'enroulement individuelles.

2. Procédé selon la revendication 1, **caractérisé en ce que** les spires d'enroulement (23) des au moins trois couches d'enroulement (20a, 20b, 20c, 20d) sont enroulées sur le noyau d'enroulement (11) de sorte qu'elles couvrent complètement au moins une partie du noyau d'enroulement (11).

3. Procédé selon la revendication 1 ou 2, **caractérisé en ce que**, pour chaque couche d'enroulement (20a, 20b, 20c, 20d), au moins deux spires d'enroulement (23) de la matière fibreuse sont chacune enroulées séparément l'une de l'autre sur le noyau d'enroulement (11) au moins par sections, en formant des espaces intermédiaires (25) entre les spires d'enroulement (23), de sorte que le rapport entre la somme des surfaces des espaces intermédiaires présents dans la couche d'enroulement (20a, 20b, 20c, 20d) entre les spires d'enroulement (23) et la surface totale de la couche d'enroulement (20a, 20b, 20c, 20d) est de 0,99000 à 0,99999.

4. Procédé selon les revendications 1 à 3, **caractérisé en ce que**, pour chaque couche d'enroulement (20a, 20b, 20c, 20d), au moins deux spires d'enroulement (23) de la matière fibreuse sont chacune enroulées séparément l'une de l'autre sur le noyau d'enroulement (11) au moins par sections, en formant des espaces intermédiaires (25) entre les spires d'enroulement (23), de sorte que le rapport entre la somme des surfaces des espaces intermédiaires présents dans la couche d'enroulement (20a, 20b, 20c, 20d) entre les spires d'enroulement (23) et la surface totale de la couche d'enroulement (20a, 20b, 20c, 20d) est de 0,99990 à 0,99999.

5. Procédé selon au moins l'une des revendications 1 à 4, **caractérisé par** les étapes supplémentaires consistant à :
- imprégner la matière fibreuse avant, pendant ou après l'enroulement avec un liant, et
- durcir le liant après l'imprégnation et l'enroulement de la matière fibreuse.

6. Procédé selon la revendication 5, **caractérisé en ce que** le durcissement est effectué thermiquement et/ou chimiquement.

7. Procédé selon au moins l'une des revendications 1 à 6, **caractérisé en ce que**, pour l'enroulement, des écheveaux de filaments (17) contenant des fibres de carbone sont déposés sur le noyau d'enroulement (11).

8. Procédé selon au moins l'une des revendications 1 à 7, **caractérisé en ce que**, avant l'enroulement des couches d'enroulement (20a, 20b, 20c, 20d) sur le noyau d'enroulement (11), on crée et/ou configure un programme qui contient des instructions de commande concernant l'enroulement pour une machine d'enroulement automatique, l'enroulement des spires d'enroulement (23) étant effectué en exécutant les instructions de commande.
